# EUROPEAN PATENT APPLICATION

(11) **EP 1 667 157 A1**
(43) Date of publication of application: **07.06.2006**
(21) Application number: 05026608.9
(22) Date of filing: 06.12.2005
(51) Int. Cl.: G11B 27/11, G11B 27/10, G11B 20/10, G11B 19/02

(54) **Method and apparatus for establishing environment of digital device using portable memory**

(30) Priority: 06.12.2004 KR 2004101629
(71) Applicant: LG Electronics Inc., Yongdungpo-Gu Seoul 150-010 (KR)
(72) Inventor: Lee, Jung Min, Osan-si Gyeonggi-do 447-734 (KR)
(74) Representative: Vossius & Partner

(57) **Abstract**

Embodiments of method and apparatus according to the invention can set an environment of a digital DVD device using a portable memory. A portable memory can store a plurality of environment setup information, for example, lock information, favorite channel information, logo screen image information, and screen saver information, etc. The portable memory including the environment setup information can be inserted in the digital device or other digital devices, such that an environment of a corresponding digital device can be established (Fig. 1).

## Description

The present invention relates to a method and apparatus for establishing environment of a digital device, and more particularly to a method and apparatus for storing environment setup information in a portable memory of a digital device such as a DVD-recorder or a DVD-player, and establishing use environment of the digital device according to environment setup information stored in a portable memory.

A user establishes user environments such as language information before a related art DVD-recorder or DVD-player records or reproduces multimedia data. The user may switch a current channel to another channel while the multimedia data is recorded or reproduced, and thus, can determine his or her frequently-used channel to be a favorite channel simultaneously when watching broadcast images. Further, the user may insert a family picture or a desired image in a logo-screen or a screen saver as necessary.

However, the related art DVD-recorder or DVD-player and methods thereof having various disadvantages. For example, the user has difficulty in manually setting the user environment before employing the digital DVD devices, which can result in delay in using the device, errors in setting up the device and increased inconvenience of the use of the digital device.

The above references are incorporated by reference herein where appropriate for appropriate teachings of additional or alternative details, features and/or technical background.

An object of the invention is to solve at least the above problems and/or disadvantages and to provide at least the advantages described hereinafter.

Another object of the invention to provide a method and apparatus for setting/storing user environments in a digital device that can solve at least the above problems and/or disadvantages and to provide at least the advantages described hereinafter.

Another object of the invention to provide a method and apparatus for setting/storing user environments in a digital device that can establish a use environment of the digital device according to environment setup information stored in a portable memory.

Another object of the invention to provide a method and apparatus for setting/storing user environments in a digital device such as a DVD-recorder or a DVD-player.

In accordance with one aspect of the invention, at least the above and other objects can be accomplished in whole or in part by an apparatus for setting an environment of a digital device that includes a portable memory configured to store environment setup information, a connector configured to connect to the portable memory and a controller configured to download the environment setup information from the portable memory using the connector, and set an environment of the digital device to coincide with the downloaded environment setup information, wherein the digital device is configured to record or reproduce a video or audio signal.

In accordance with another aspect of the invention, there is provided an apparatus for setting an environment of digital device capable of recording or reproducing a video or audio signal that includes a connector contained in the digital device and configured to connect external to the digital device and a controller configured to set an environment of the digital device responsive to the environment setup information imported through the connector.

In accordance with yet another aspect of the invention, there is provided a digital device for recording or reproducing a video or audio signal that includes a connector contained in the digital device and configured to transfer environmental setup information, wherein the connector is configured to be connected to a detachable portable memory and a controller configured to control environment setup information selected by the digital device to be exported through the connector, and set an environment of the digital device responsive to the environment setup information imported through the connector, wherein the digital device is configured to record or reproduce a video or audio signal.

In accordance with yet another aspect of the invention, there is provided a method for setting an environment of a digital device that includes enabling the digital device and setting an environment of the digital device on the basis of an environment setup configuration stored in a portable memory, wherein the digital device is capable of recording or reproducing a video or audio signal.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:

FIG. 1 is a block diagram illustrating a related art digital device;

FIG. 2 is a block diagram illustrating an environment setup device using a portable memory in accordance with a preferred embodiment of the invention;

FIGS. 3a and 3b are flow charts illustrating a method for setting environments using a portable memory in accordance with a preferred embodiment of the invention; and

FIG. 4 is a diagram that shows exemplary environment setup images according to the invention.

### DETAILED DESCRIPTION OF PREFERRED EMBODIMENTS

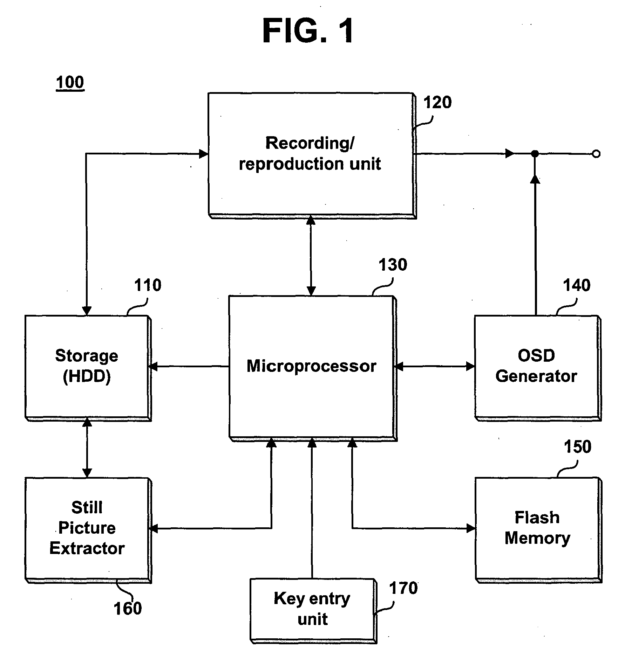

FIG. 1 is a block diagram illustrating a related art digital device 100. As shown in FIG. 1, the digital device 100 can include a storage unit 110, a recording/reproduction unit (also called a record/play unit) 120, a microprocessor 130, an OSD (On Screen Display) generator 140, a flash memory 150, a still-picture extractor 160, and a key entry unit 170, etc.

An optical disc capable of storing a variety of programs composed of digital video and audio data, for example, a mass-storage recording medium such as an HDD (Hard Disc Drive) or a recordable DVD such as a DVD-R or DVD-RW can be used as the storage unit 110. An MPEG-based A/V data, a variety of audio files such as MP3 audio files, or a variety of image files such as JPEG or BMP files can be stored in the storage unit 110.

The recording/reproduction unit 120 can convert external input data into specific data suitable for a recording operation upon receiving a control signal from the microprocessor 130, record the converted data in an HDD, and perform a data reproduction operation to read data recorded in the HDD and reproduce the read data.

The microprocessor 130 can control the recording/reproduction unit 120 upon receiving a request (e.g., from a user), read an A/V data stream, audio files, and image files from the storage unit 110, and output audio and video data to an external device such as a TV. The microprocessor 130 can control the OSD generator 140 upon receiving a request (e.g., from the user), and display a list of A/V files, audio files, or image files on an OSD screen, such that a desired A/V file, a desired audio file, or a desired image file can be selected from the list of the A/V files.

The OSD generator 140 can output the record list of a plurality of programs stored in an HDD (Hard Disc Drive). The record list may include a thumbnail picture capable of representing each program, a program name, a record date, a record time, etc. The still-image extractor 160 can extract a scene or frame of a predetermined moment upon receiving a control signal from the microprocessor 130, determine the extracted scene or frame to be a still image, and store the still image in title information of a corresponding program.

The microprocessor 130 can reproduce multimedia data such as moving image data, or record other multimedia data received from an external part. If the key entry unit 170 enters a capture command, the microprocessor 130 can store a still image corresponding to an input moment of the capture command in the flash memory 150. If the user enters a command for editing the record list, the microprocessor 130 can select one of still images stored in the flash memory 150, and determine the selected still image to be a thumbnail image of the record list. The microprocessor 130 can additionally record the selected still image in a DVD-RW disc, and update thumbnail position information of a corresponding record list using position information of the recorded thumbnail still image.

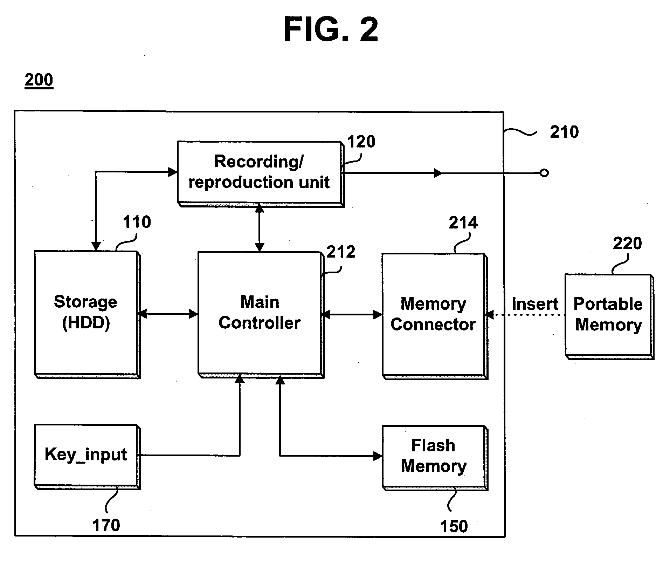

FIG. 2 is a block diagram illustrating an environment setup device using a portable memory in accordance with an embodiment of the invention. As shown in FIG. 2, an environment setup device 200 can include a digital device 210 and a portable memory 220.

The digital device 210 can control environment setup information to be stored in the portable memory 220, and set device environments according to environment setup information stored in the portable memory 220. The digital device can be a DVD-player, DVD-recorder or the like. The portable memory 220 can store environment setup information received from the digital device 210.

The digital device 210 can store a plurality of environment setup information units established by a key entry signal of a user in the portable memory 220, for example, lock information, favorite channel setup information, logo screen setup information, or screen saver setup information, etc. However, the invention is not intended to be so limited.

Also, the digital device 210 can read the environment setup information from the portable memory 220, and employ the read environment setup information to establish the environment of the digital device 210. The portable memory 220 can be detachably coupled to the digital device 210, and the user can carry the portable memory 220.

For operations, the main controller 212 can store environment setup information in the portable memory 220, or download the environment setup information from the portable memory 220. The memory connector 214 to can communicate with the portable memory 220 (e.g., insert the portable memory 220 therein) such that a plurality of environment setup information units can be transmitted or received to/from the portable memory 220. The memory connector 214 can be coupled to the main controller 212.

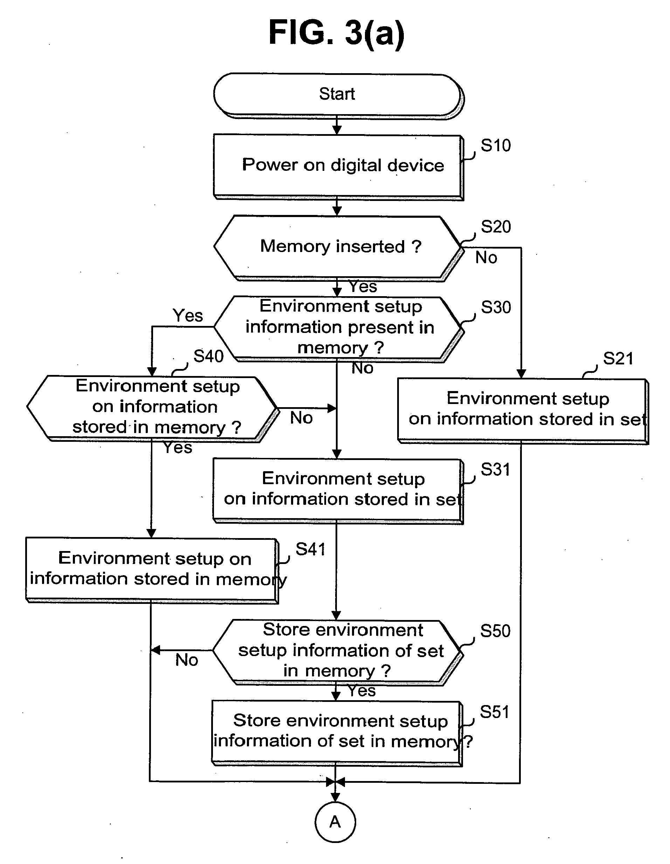

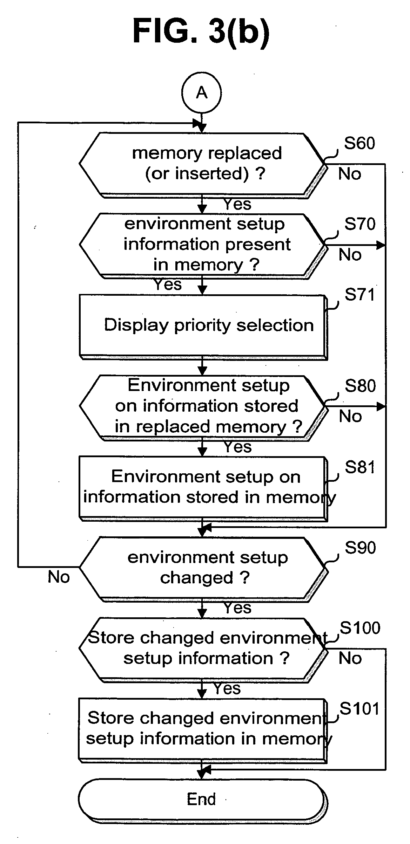

FIGS. 3a-3b are flow charts that illustrate a method for setting environments using a portable memory in accordance with an embodiment of the invention. The embodiment of a method for setting environments shown in FIGS. 3a-3b can be applied to and will be described using the device shown in FIG. 2. However, the invention is not intended to be so limited.

As shown in FIG. 3(a), if a user powers on the digital device 210 such as a DVD-player or a DVD-recorder such that a power-supply signal is applied to the digital device 210 (block S10), the main controller 212 of the digital device 210 can determine whether the portable memory 220 is inserted in the memory connector 214 (block S20).

If the portable memory 220 is not inserted in the memory connector 214(block S20), the main controller 212 can set a user environment of the digital device 210 to a basic environment, or performs user environment setup according to environment setup information stored in the flash memory 150 of the digital device 210 (block S21).

If the portable memory 220 is inserted in the memory connector 214 (block S20), the main controller 212 can determine whether environment setup information is stored (e.g., previously set by a user or the like) in the portable memory 220 (block S30). If the environment setup information is stored in the portable memory 220, the main controller 212 can determine whether the user environment information of the digital device 210 is to be established according to environment setup information stored in the portable memory 220 (block S40). For example, the main controller 212 may query the user for the user environment setup information, or may determine the user environment information according to other references. In one embodiment, the user may provide selection rules such as automatic selection thereof, using prioritization, a system can ask the user each time for instructions or the like.

If the user environment information of the digital device 210 is to be determined according to the environment setup information stored in the portable memory 220, the main controller 212 can download the environment setup information from the portable memory 220, and automatically or directly establish the user environment information of the digital device 210 according to the downloaded environment setup information (block S41). Otherwise, the main controller 212 can establish user information of the digital device 210 according to environment setup information stored in the flash memory 150 of the digital device 210 (block S31).

If the main controller 212 establishes the user information of the digital device 210 according to environment setup information stored in the flash memory 150 of the digital device 210 (block S31), the main controller 212 can query the user for specific information indicating whether to set the environment setup information stored in the flash memory 150 of the digital device 210 in the portable memory 220 (block S50). The main controller 212 can store the environment setup information stored in the flash memory of the digital device 210 in the portable memory 220 (e.g., including modifications, if any) according to a user selection signal.

If the user environment information is established, the digital device can enter a standby mode such that it can record digital image data in an optical disc such as a DVD, or can reproduce the digital image data from the optical disc (e.g., block A).

If the user inserts the portable memory 220 into the memory connector 214 in the standby mode (or if an old portable memory inserted into the memory connector 214 is replaced with a new portable memory) (block S60), the main controller 212 can determine whether environment setup information is stored in the inserted portable memory 220 (block S70).

If the environment setup information is stored in the portable memory 220, the main controller 212 can display specific information indicative of priority information on a display (block S71). For example, the priority information can indicate whether user environment information is to be determined according to the environment setup information stored in the portable memory 220 or a current user environment is to be maintained.

If the user uses a key button or remote-controller of the digital device 210 to enter a user environment setup request of the digital device 210 according to the environment setup information stored in the portable memory 220 (block S80), the main controller 212 can download the environment setup information from the portable memory 220, and establish environment information of the digital device 210 according to the downloaded environment setup information (block S81).

In one case, the main controller 212 can establish a corresponding environment of the digital device 210 on the basis of a plurality of environment setup information units downloaded from the portable memory 220, for example, lock information, favorite channel information, selected (e.g., prioritized) language of a plurality of languages or subtitles (e.g., same or different), selected audio format of a plurality of audio formats, logo screen image information, and screen saver information, etc.

If environment setup information units of a plurality of sets are stored in the portable memory 220, the main controller 212 may allow the user to select desired environment setup information.

If the environment setup information is not stored in the portable memory 220 (block S70), or if the user enters a request to maintain a current user environment (block S80), the main controller 212 can maintain the current user environment without operations for the above-described environment setup.

If the portable memory 220 storing the environment setup information is inserted or replaced a new portable memory with, the main controller 212 may unconditionally establish environment information of the digital device 210 according to environment setup information stored in the new portable memory 220. For example, operations described above for block S71 and S80 may not be performed.

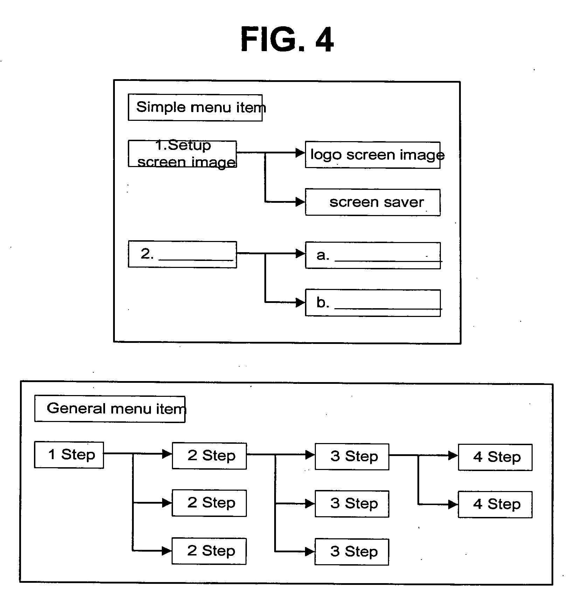

If the user enters a command to change use environment setup information to another information using a key entry button or remote controller of the digital device 210, the main controller 212 can provide a predetermined screen image associated with environment setup information, for example, as shown in FIG. 4, such that the user can select a desired user environment, such as a logo screen image environment (e.g., setup information units), from a plurality of environment setup menus. Further, the user can select among a plurality of sets thereof such sets of locking information, security information, authorization information and the like (e.g., including priority values).

The main controller 212 can change user environment information of the digital device 210 to another user information according to the user-selected environment setup information. For example, the screen image associated with the environment setup information may include a simple menu item associated with a frequently-used menu and a general menu item associated with all the environment setup information, such as shown in FIG. 4, such that it may be displayed on the display.

Further, after the user changes setup information associated with the plurality of user environment information (e.g., lock setup information, logo screen image information, and screen saver information, etc.) to another environment setup information (block S90), the user can enter a predetermined key signal to store the changed environment setup information in the portable memory 220 (block S100), such that the changed environment setup information may be applied to other digital devices or the user may allow the changed environment setup information to be stored as unique environment setup information accessed by only the user. If the user enters the predetermined key signal (block S100), the main controller 212 can transmit the plurality of current environment setup information units changed (e.g., block S90) to the portable memory 220 via the memory connector 214, and store the same in the portable memory 220 (block S101).

If the environment setup information is pre-stored in the portable memory 220, the main controller 212 may update old environment setup information to new environment setup information. Otherwise, the main controller 212 may includes the new environment setup information in a separate or newly created single set, such that the single set may be stored apart from the old environment setup information in the portable memory 220. In order to store the single set separately from the old environment setup information stored in the portable memory 220, the main controller 212 may store each environment setup information set in different folders, or may assign different names to individual environment setup information or the like as necessary.

Thereafter, when the user enters a key input signal to record or reproduce digital image data, the main controller 212 can record the digital image data in the digital device 210 or reproduce the digital image data from the digital device 210 according to the environment setup information determined by the user.

Therefore, there is no need for the user to enter a key input signal operations several times to create or modify environment setup operations, and the digital device can automatically perform the above-described environment setup operation using the portable memory 220.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments. Furthermore, for ease of understanding, certain method procedures may have been delineated as separate procedures; however, these separately delineated procedures should not be construed as necessarily order dependent in their performance. That is, some procedures may be able to be performed in an alternative ordering, simultaneously, etc.

As described above, embodiments of methods and apparatus for establishing environment setups for DVD-recorders, DVD players or a digital device according to the invention have various advantages. For example, there is no need for the user to enter a key input signal several times for the environment setup operations, which can result in greater convenience of the user during an environment setup process of a digital device. Further, set-up time of a DVD-recorder can be reduced.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. An apparatus for setting an environment of a digital device, comprising
a portable memory configured to store environment setup information;
a connector configured to connect to the portable memory; and
a controller configured to download the environment setup information from the portable memory using the connector, and set an environment of the digital device to coincide with the downloaded environment setup information, wherein the digital device is configured to record or reproduce a video or audio signal.

2. The apparatus of claim 1, wherein the environment setup information includes lock information, favorite channel information, logo screen image information, language, audio format or screen saver information.

3. The apparatus of claim 1 or 2, wherein the environment setup information is configured to be imported to a plurality of digital devices including a digital video player.

4. The apparatus of claim 3, wherein the portable memory is connected to a second digital device, and wherein a controller of the second digital device is configured to download the environment setup information from the portable memory and set an environment of the second digital device to coincide with the downloaded environment setup information.

5. An apparatus for setting an environment of digital device capable of recording or reproducing a video or audio signal, comprising:
a connector contained in the digital device and configured to connect external to the digital device; and
a controller configured to set an environment of the digital device responsive to the environment setup information received through the connector.

6. The apparatus of claim 5, wherein controller is configured to export the environment setup information selected in the digital device through the connector.

7. The apparatus of claim 5 or 6, wherein the environment setup information includes lock information, favorite channel information, language, audio format, logo screen image information, or screen saver information.

8. The apparatus of claim 7, wherein the environment setup information is configured to be imported to a plurality of digital devices including a digital video plaper.

9. The apparatus of any of claims 5 to 8, wherein the environment setup information comprises a plurality of different selectable environment setup configurations.

10. A method for setting an environment of a digital device, comprising:
enabling the digital device; and
setting an environment of the digital device on the basis of an environment setup configuration stored in a portable memory, wherein the digital device is capable of recording or reproducing a video or audio signal.

11. The method of claim 10, comprising:
storing the environment setup configuration of the digital device in the portable memory.

12. The method of claim 10 or 11, wherein the environment setup information includes lock configuration, favorite channel information, logo screen image information, or screen saver information.

13. The method of any of claims 10 to 12, wherein the environment setup configuration of the digital device is designated by a user.

14. The method of any of claims 10 to 13, wherein the setting comprising:
selecting one of a plurality of different environment setup configurations stored in the portable memory.

15. The method of claim 14, wherein at least one environment setup configuration is configured to be imported to a plurality of digital devices including a digital video player.

16. The method of claim 14 or 15, wherein the selecting comprising:
determining the selected one of the plurality of different environment setup configurations using a corresponding priority of each of the environment setup configurations.

17. The method of any of claims 10 to 16, further comprising determining a priority of environment setup configuration preset in the digital device and the environment setup configuration stored in the portable memory.

18. The method of any of claims 10 to 17, wherein the setting is completed during an initialization process of the digital device or an subsequent turn-on process of the digital device.

19. The method of any of claims 10 to 18, comprising:
attaching a different portable memory to the digital device; and
setting the environment of the digital device on the basis of the environment setup configuration stored in the different portable memory.

20. The method of claim 19, further comprising determining priority of the downloaded environment setup configuration in the digital device and the environment setup configuration stored in the different portable memory, and wherein the environment setup configuration includes lock information, favorite channel information, language, logo screen image information, or screen saver information.
